# EUROPEAN PATENT APPLICATION

(11) **EP 3 525 148 A1**
(43) Date of publication of application: **14.08.2019**
(21) Application number: 17889621.3
(22) Date of filing: 25.12.2017
(51) Int. Cl.: G06Q 20/08, G06Q 20/10

(54) **PAYMENT SERVICE EXECUTION SYSTEM, METHOD, AND DEVICE**

(30) Priority: 06.01.2017 CN 201710010074
(71) Applicant: Alibaba Group Holding Limited, Grand Cayman (KY)
(72) Inventor: LIN, Lang, Hangzhou, Zhejiang 311121 (CN)
(74) Representative: Branderhorst, Matthijs Pieter Arie
(86) International application number: PCT/CN2017/118257
(87) International publication number: WO 2018/126923

(57) **Abstract**

This application discloses a payment service execution system, method, and device. The method includes: determining, according to an identifier of a server of a card issuing institution carried in a payment request sent from a server of an acquiring institution, that the payment request is to be executed by the server of the card issuing institution; generating a service identifier of a card organization according to the payment request; returning the service identifier of the card organization to a purchasing terminal; and sending the service identifier of the card organization to the server of the card issuing institution to cause the purchasing terminal to send a payment operation request to the server of the card issuing institution according to the service identifier of the card organization and thus cause the server of the card issuing institution to execute, according to the payment operation request, a payment service created based on the service identifier of the card organization. It can be seen that the purchasing terminal does not need to wait during the process in which the server of the card issuing institution receives the payment request and returns the service identifier of the card issuing institution created according to the payment request, thereby reducing a wait time for a user, reducing security risk, and improving payment service execution efficiency.

## Description

### TECHNICAL FIELD

This application relates to the field of information technologies, and in particular to a payment service execution system, method, and device.

### BACKGROUND

With the development of information technologies, on-line payment has become a common service. However, funds of buyers or merchants are deposited in banks, and the banks, institutions, or platforms where the merchants or buyers deposit their funds are not completely the same. This results in communications among different institutions, and the communications among different banks are typically forwarded by a card organization (i.e., a quadripartite mode).

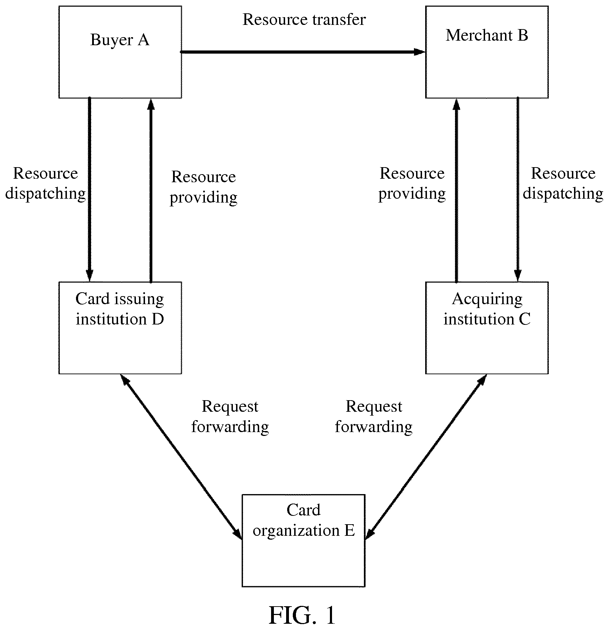

In particular, in the existing technologies, a quadripartite mode in which a payment service is implemented is shown in FIG. 1. It can be seen that such mode includes a buyer A, a merchant B, an acquiring institution C, a card issuing institution D, and a card organization E. The acquiring institution C and the card issuing institution D may be various banks, institutions for depositing funds, or platforms for deposition funds. The card issuing institution C and the acquiring institution D are different institutions (if they are the same institution, there's no need to employ the quadripartite mode, but the payment service is executed inside the institution). The card organization E may be an institution that forwards service requests for the card issuing institution C and the acquiring institution D and performs liquidations. Common card organizations include China Unionpay, Visa International Service Association (VISA), MasterCard International, etc.

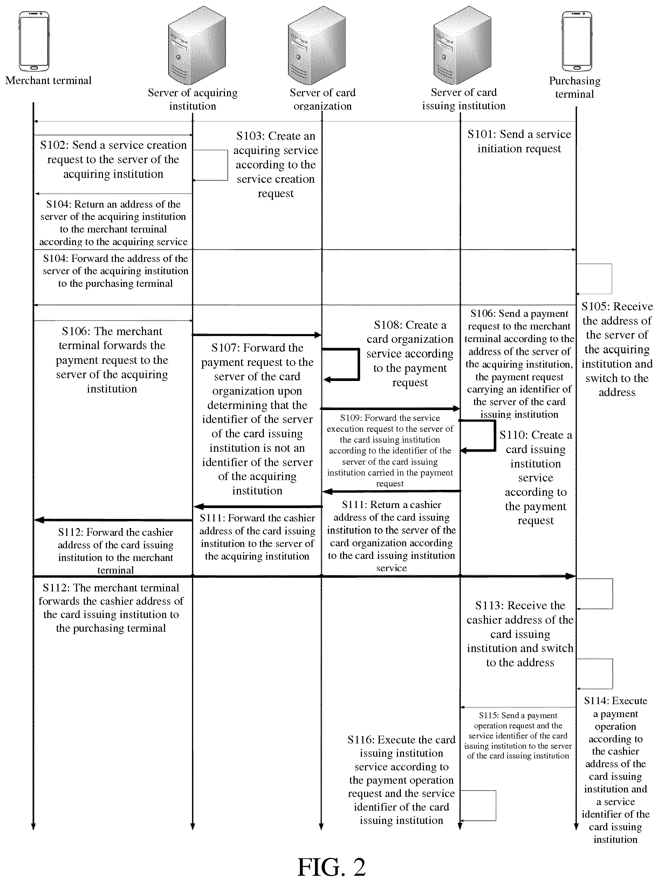

In addition, a payment execution process in a quadripartite mode in the existing technologies may be shown in FIG. 2.

FIG. 2 is a payment service execution process in a quadripartite mode in the existing technologies, which may further includes the steps of:
S101: A purchasing terminal sends a service initiation request to a merchant terminal.
S102: The merchant terminal sends a service creation request to a server of an acquiring institution associated with the merchant terminal according to the service initiation request.
S 103: The server of the acquiring institution creates an acquiring service according to the service creation request.
S104: The server of the acquiring institution returns an address of the server of the acquiring institution to the merchant terminal according to the acquiring service to cause the merchant terminal to forward the address of the server of the acquiring institution to the purchasing terminal.
S105: The purchasing terminal receives the address of the server of the acquiring institution and switches to the address.
S106: The purchasing terminal sends a payment request to the merchant terminal according to the address of the server of the acquiring institution to cause the merchant terminal to forward the payment request to the server of the acquiring institution, the payment request carrying an identifier of a server of a card issuing institution.
S107: The server of the acquiring institution forwards the payment request to a server of a card organization upon determining that the identifier of the server of the card issuing institution is not an identifier of the server of the acquiring institution.
S108: The server of the card organization creates a card organization service according to the payment request.
S109: The server of the card organization forwards the service execution request to the server of the card issuing institution according to the identifier of the server of the card issuing institution carried in the payment request.
S110: The server of the card issuing institution creates a card issuing institution service according to the payment request.
Sill: The server of the card issuing institution returns a cashier address of the card issuing institution to the server of the card organization to cause the server of the card organization to forward the cashier address of the card issuing institution to the server of the acquiring institution, where the cashier address of the card issuing institution carries a service identifier of the card issuing institution.
S112: The server of the acquiring institution forwards the cashier address of the card issuing institution to the merchant terminal to cause the merchant terminal to forward the cashier address of the card issuing institution to the purchasing terminal.
S113: The purchasing terminal receives the cashier address of the card issuing institution and switches to the address.
S114: The purchasing terminal executes a payment operation according to the cashier address of the card issuing institution and the server identifier of the card issuing institution;
S115: The purchasing terminal sends a payment operation request and the service identifier of the card issuing institution to the server of the card issuing institution.
S116: The server of the card issuing institution executes the card issuing institution service according to the payment operation request and the service identifier of the card issuing institution.

The merchant terminal, the purchasing terminal, the server of the acquiring institution, the server of the card organization, and the server of the card issuing institution described above ensure that the service can be properly executed when forwarded among various apparatuses by means of the service identifier carried in the service initiation request. The service initiation request may be a request for initiating a payment service. Since the server of the acquiring institution is unable to determine whether the service initiation request is targeted for the acquiring institution or the card issuing institution upon receiving the service initiation request, the acquiring institution needs to return the address of the server of the acquiring institution to cause the purchasing terminal to send the payment request according to the address of the server of the acquiring institution and thus cause the server of the acquiring institution to determine that the payment service is to be executed by the server of the card issuing institution. Therefore, the server of the acquiring institution may forward the payment request to the server of the card issuing institution via the server of the card organization at this time so that subsequent operations are continued.

It can be seen that during the payment service execution process above, the merchant terminal only communicates with the purchasing terminal and the server of the acquiring institution, the purchasing terminal only communicates with the merchant terminal and the server of the card issuing institution, and the server of the card organization only communicates with the server of the acquiring institution and the server of the card issuing institution. The forwarding of communications among various servers by the server of the card organization E simplifies a number of objects with which servers of various institutions are to communicate, so that a server of each of the various institutions only needs to communicate with a terminal that logs on with an account registered with the server of the institution as well as the server of the card organization, thereby improving the payment service execution efficiency.

However, during the payment service execution process illustrated in FIG. 2, since the server of the card organization only plays a role of forwarding, which renders it necessary for the payment service execution process to involve the steps S107-S112 in order. A process in which the server of the card organization, the server of the card issuing institution, and the server of the acquiring institution need to communicate with each other for several times includes a total of 4 procedures as follows: forwarding, by the server of the acquiring institution, the payment request to the server of the card organization; forwarding, by the server of the card organization, the payment request to the server of the card issuing institution; returning, by the server of the card issuing institution, a cashier address of the card issuing institution to the server of the card organization; and forwarding, by the server of the card organization, the cashier address to the server of the acquiring institution. In addition, the 4 communication procedures can only be executed in sequence, which results in a situation that the payment service execution process is stopped when a problem occurs to one of the server of the acquiring institution, the server of the card organization, and the server of the card issuing institution (for example, when a problem such as an error, apparatus crash, network delay, etc. occurs during service processing).

It can be seen that various parties need to iteratively perform a communication process in sequence when an inter-institution service is involved during a payment service execution process in the existing technologies, which results in a long wait time for a user during service execution, causes an increased security risk, and reduces the payment service execution efficiency as well.

### SUMMARY

An embodiment of this application provides a payment service execution system for addressing problems of the existing technologies such as a long payment service execution time, an increased security risk, and a reduced payment efficiency that arise during a payment service execution process in a quadripartite mode.

An embodiment of this application provides a payment service execution method for addressing problems of the existing technologies such as a long payment service execution time, an increased security risk, and a reduced payment efficiency that arise during a payment service execution process in a quadripartite mode.

An embodiment of this application provides a payment service execution device for addressing problems of the existing technologies such as a long payment service execution time, an increased security risk, and a reduced payment efficiency that arise during a payment service execution process in a quadripartite mode.

The following technical solutions are employed in the embodiments of this application:
A payment service execution system, including a purchasing terminal, a server of an acquiring institution, a server of a card organization, and a server of a card issuing institution, where
the purchasing terminal sends a payment request to the server of the acquiring institution, where the payment request carries an identifier of the server of the card issuing institution, and the payment request indicates a payment service to be executed by the server of the card issuing institution;
the acquiring institution server sends the received payment request to the server of the card organization;
the server of the card organization generates a service identifier of the card organization according to the payment request, sends the service identifier of the card organization to the server of the card issuing institution, and sends the service identifier of the card organization to the purchasing terminal via the server of the acquiring institution;
the server of the card issuing institution creates a payment service according to the service identifier of the card organization;
the purchasing terminal sends a payment operation request carrying the service identifier of the card organization to the server of the card issuing institution; and
the server of the card issuing institution executes the created payment service according to the service identifier of the card organization carried in the payment operation request.

A payment service execution method, including:
receiving, by a server of a card organization, a payment request sent from a server of an acquiring institution, where the payment request carries an identifier of a server of a card issuing institution, and the payment request indicates a payment service to be executed by the server of the card issuing institution;
generating a service identifier of the card organization according to the payment request;
returning the service identifier of the card organization to a purchasing terminal via the server of the acquiring institution; and
sending the service identifier of the card organization to the server of the card issuing institution to cause the server of the card issuing institution to create the payment service according to the service identifier of the card organization and execute the payment service according to a payment operation request sent from the purchasing terminal that carries the service identifier of the card organization.

A payment service execution method, including:
creating, by a server of a card issuing institution, a payment service according to a service identifier of a card organization sent from a server of the card organization upon receiving the service identifier of the card organization;
receiving a payment operation request carrying the service identifier of the card organization sent from a purchasing terminal; and
determining the payment service corresponding to the payment operation request according to the service identifier of the card organization and executing the payment service according to the payment operation request.

A payment service execution device, including:
a receiving module for receiving a payment request sent from a server of an acquiring institution, where the payment request carries an identifier of a server of a card issuing institution, and the payment request indicates a payment service to be executed by the server of the card issuing institution;
a generating module for generating a service identifier of the card organization according to the payment request;
a first sending module for returning the service identifier of the card organization to a purchasing terminal via the server of the acquiring institution; and
a second sending module for sending the service identifier of the card organization to the server of the card issuing institution to cause the server of the card issuing institution to create the payment service according to the service identifier of the card organization and execute the payment service according to a payment operation request sent from the purchasing terminal that carries the service identifier of the card organization.

A payment service execution device, including:
a first receiving module for creating a payment service according to a service identifier of a card organization sent from a server of the card organization upon receiving a payment request carrying the service identifier of the card organization;
a second receiving module for receiving a payment operation request carrying the service identifier of the card organization sent from a purchasing terminal; and
an execution module for determining the payment service corresponding to the payment operation request according to the service identifier of the card organization and executing the payment service according to the payment operation request.

A payment service execution system, including a purchasing terminal, a server of an acquiring institution, a server of a card organization, and a server of a card issuing institution, where
the purchasing terminal sends a payment request to the server of the acquiring institution, where the payment request carries an identifier of the server of the card issuing institution, and the payment request indicates a payment service to be executed by the server of the card issuing institution;
the server of the acquiring institution forwards the received payment request to the server of the card organization;
the server of the card organization generates a service identifier of the card organization according to the payment request, sends a uniform resource locator (URL) carrying the service identifier of the card organization to the server of the card issuing institution, and sends the URL to the purchasing terminal;
the server of the card issuing institution creates a payment service according to the service identifier of the card organization;
the purchasing terminal sends a payment operation request carrying the service identifier of the card organization to the server of the card issuing institution according to the URL; and
the server of the card issuing institution executes the created payment service according to the service identifier of the card organization carried in the payment operation request.

A payment service execution method, including:
receiving, by a server of a card organization, a payment request sent from a server of an acquiring institution, where the payment request carries an identifier of a server of a card issuing institution, and the payment request indicates a payment service to be executed by the server of the card issuing institution;
generating a service identifier of the card organization according to the payment request and generating a URL carrying the service identifier of the card organization, and sending the URL to a purchasing terminal; and
sending the service identifier of the card organization to the server of the card issuing institution to cause the server of the card issuing institution to create the payment service according to the service identifier of the card organization and execute the service.

A payment service execution method, including:
creating, by a server of a card issuing institution, a payment service according to a service identifier of a card organization sent from a server of the card organization upon receiving the service identifier of the card organization;
receiving a payment operation request carrying the service identifier of the card organization sent from a purchasing terminal according to a URL carrying the service identifier of the card organization; and
determining the payment service corresponding to the payment operation request according to the service identifier of the card organization and executing the payment service according to the payment operation request.

A payment service execution device, including:
a receiving module for receiving a payment request sent from a server of an acquiring institution, where the payment request carries an identifier of a server of a card issuing institution, and the payment request indicates a payment service to be executed by the server of the card issuing institution;
a generating module for generating a service identifier of the card organization according to the payment request and generating a URL carrying the service identifier of the card organization, and sending the URL to a purchasing terminal; and
a sending module for sending the service identifier of the card organization to the server of the card issuing institution to cause the server of the card issuing institution to create the payment service according to the service identifier of the card organization and execute the service.

A payment service execution device, including:
a first receiving module for creating a payment service according to a service identifier of a card organization sent from a server of the card organization upon receiving the service identifier of the card organization;
a second receiving module for receiving a payment operation request carrying the service identifier of the card organization sent from a purchasing terminal according to a URL carrying the service identifier of the card organization; and
an execution module for determining the payment service corresponding to the payment operation request according to the service identifier of the card organization and executing the payment service according to the payment operation request.

At least one of the above technical solutions employed in the embodiments of this application can achieve the following beneficial effects:
according to the identifier of the server of the card issuing institution carried in the payment request sent from the server of the acquiring institution, it is determined that the payment request is to be executed by the server of the card issuing institution; the service identifier of the card organization is generated according to the payment request; the service identifier of the card organization is returned to the purchasing terminal; and the service identifier of the card organization is sent to the server of the card issuing institution to cause the purchasing terminal to send the payment operation request to the server of the card issuing institution according to the service identifier of the card organization and thus cause the server of the card issuing institution to execute, according to the payment operation request, the payment service created based on the service identifier of the card organization. It can be seen that the purchasing terminal does not need to wait during the process in which the server of the card issuing institution receives the payment request and returns the service identifier of the card issuing institution created according to the payment request, thereby reducing a wait time for a user, reducing security risk, and improving payment service execution efficiency.

### BRIEF DESCRIPTION OF THE DRAWINGS

The accompanying drawings set forth herein are used for providing a further understanding of this application and constitute a part of this application. Exemplary embodiments of this application and the description thereof are used for explaining this application, and does not constitute any improper limitation on this application. In the accompanying drawings:
FIG. 1 is a schematic structural diagram of a quadripartite mode according to the existing technologies;
FIG. 2 is a payment service execution process in a quadripartite mode according to the existing technologies;
FIG. 3 is a payment service execution system according to an embodiment of this application;
FIG. 4 is a payment service execution process according to an embodiment of this application;
FIG. 5 is another payment service execution process according to an embodiment of this application;
FIG. 6 is a detailed payment service execution process according to an embodiment of this application;
FIG. 7 is a schematic structural diagram of a payment service execution device according to an embodiment of this application; and
FIG. 8 is a schematic structural diagram of another payment service execution device according to an embodiment of this application.

### DETAILED DESCRIPTION OF THE INVENTION

To make the objectives, technical solutions, and advantages of this application more comprehensible, the technical solutions of this application will be described clearly and thoroughly below with reference to specific embodiments of this application and corresponding drawings. It is apparent that the described embodiments are merely some rather than all of the embodiments of this application. All other embodiments obtained by a person of ordinary skill in the art based on the embodiments of this application without creative efforts shall fall within the protection scope of this application.

The technical solutions provided by the embodiments of this application are described below with reference to the accompanying drawings.

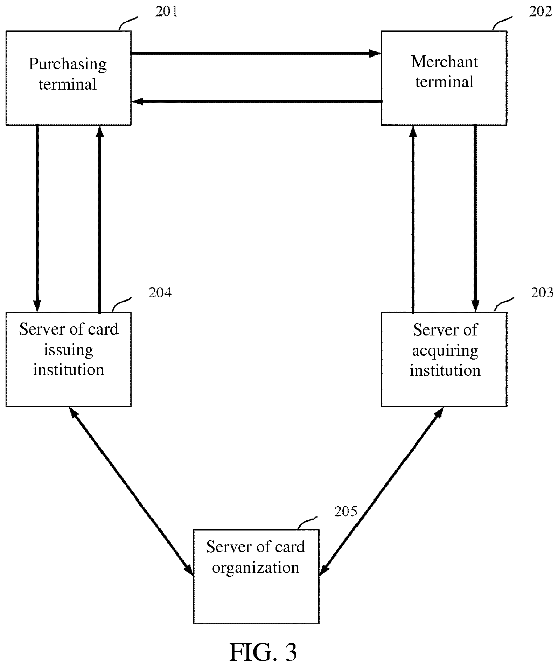

FIG. 3 is a payment service execution system according to an embodiment of this application. The system includes a purchasing terminal 201, a server of an acquiring institution 203, a server of a card organization 205, and a server of a card issuing institution 204. A merchant terminal 202 may make a payment transaction with the purchasing terminal 201, and an account of the acquiring institution is logged in on the merchant terminal 202, while an account of the card issuing institution is logged in on the purchasing terminal 201.

In addition, in this application, the acquiring institution and the card issuing institution may be a unit, institution, platform or third party that provides financial services such as a payment service, a fund receiving service, and a fund transfer service. The acquiring institution and the card issuing institution may provide services such as off-line payment, fund receiving, and fund transfer, as well as services such as on-line payment, fund receiving, and fund transfer.

In a payment service execution process, since the buyer, as an initiating party of a payment service, has an account for the payment service, an institution providing the account for the buyer is called a card issuing institution, that is, the buyer has an account with the card issuing institution. The merchant, as an acquiring party receiving the payment service initiated by the buyer, may create a transaction order based on the received payment service, so the merchant has an account for a fund receiving service, and thus an institution providing the account for the merchant is called an acquiring institution, that is, the merchant has an account with the acquiring institution. It can be seen that the acquiring institution and the card issuing institution may actually be institutions with similar functions (i.e., institutions providing financial services such as on-line and off-line payment, fund transfer, and fund receiving). However, they are called a card issuing institution and an acquiring institution respectively due to their different roles in the payment service.

Further, since both of the card issuing institution and the acquiring institution may be institutions providing financial services such as on-line and off-line payment, fund transfer, and fund receiving, the form of the account owned by the buyer from the acquiring institution and the account owned by the merchant from the card issuing institution is not defined in this application. The accounts may be either in the form of bank cards or in the form of on-line registered accounts. The bank cards may be used for financial services such as off-line payment, fund transfer, and fund receiving, while the accounts may be used for financial services such as on-line payment, fund transfer, and fund receiving.

For example, when the buyer holds a bank card from the card issuing institution, the buyer may initiate an off-line payment service with the merchant by the bank card, while when the buyer holds an account with the card issuing institution, the buyer may initiate an on-line payment service with the merchant by the account.

Further, in this application, the card organization functions to forward information related to financial services such as a payment service, a fund receiving service, and a fund transfer service between the acquiring institution and the card issuing institution, and may also liquidate the financial services such as the payment service, the fund receiving service, and the fund transfer service between the acquiring institution and the card issuing institution (certainly, no liquidation is involved in the payment service process described in this application, so details are not described herein).

Moreover, the acquiring institution and the card issuing institution may provide both financial services such as on-line payment, fund transfer, and fund receiving, and financial services such as off-line payment, fund transfer, and fund receiving, so in this application, a function of the card organization is not limited to the forwarding of information related to off-line services between the acquiring institution and the card issuing institution, but they can also forward information related to on-line services. Also, services between the acquiring institution and the card issuing institution may be off-line services initiated on the line or on-line services initiated off the line. For example, in the case that a user A has registered an account on an on-line service platform provided by a card issuing institution F, that is, the user A has an account with the card issuing institution F, and the user A initiates a payment request a with a user B on the line by the account, since an account of the user B may be an account corresponding to a band card applied for by the user B to an acquiring institution G, that is, the user B has an account with the acquiring institution G, the payment request a is targeted for an off-line service initiated on the line, and thus a server of a card issuing institution H functions to forward information related to the payment request a initiated on the line for the off-line service.

Thus, in the payment service execution system illustrated in FIG. 3 of this application:
in an embodiment of this application, the purchasing terminal 201 may, as a service initiating party, send a payment request to the merchant terminal 202, and receive a cashier address link carrying a service identifier of the card organization returned from the merchant terminal 202. Then, the purchasing terminal 201 may switch to the cashier address link. Accordingly, the purchasing terminal 201 may send a payment operation request to the server of the card issuing institution 204 through the cashier address link when the purchasing terminal 201 detects a payment operation by the user.

Since the purchasing terminal 201 and the merchant terminal 202 have accounts with different institutions, in this application, the payment request may also carry an identifier of the server of the card issuing institution 204, such that the payment request is to be executed by the server of the card issuing institution 204.

In an embodiment of this application, the merchant terminal 202 may receive the payment request sent from the purchasing terminal 201. As described above, since the merchant terminal 202 has an account from the acquiring institution, when the merchant terminal 202 receives the payment request, it is actually the account logged in on the merchant terminal 202 that receives the payment request, the merchant terminal 202 may forward the payment request to the server of the acquiring institution 203 so that a service corresponding to the payment request is normally executed.

In addition, the merchant terminal 202 may also receive the cashier address link carrying the service identifier of the card organization returned from the server of the acquiring institution 203, and forward it to the buyer terminal 201 to cause the purchasing terminal 201 to continue subsequent operations.

In an embodiment of this application, the server of the acquiring institution 203 may receive the payment request that is sent from the purchasing terminal 201 and forwarded by the merchant terminal 202. In addition, since the payment request carries the identifier of the server of the card issuing institution 204, the server of the acquiring institution 203 may determine that the payment request is to be executed by the server of the card issuing institution 204 instead of the server of the acquiring institution 203, and therefore the payment request is an inter-institution payment request. Since the card organization functions to forward information related to services between the acquiring institution and other institutions, the server of the acquiring institution 203 may also forward the payment request to the server of the card organization 205 to cause the server of the card organization 205 to forward the payment request to ensure normal execution of the service corresponding to the payment request.

In the existing technologies, during normal execution of the service corresponding to the payment request, the purchasing terminal 201 needs to obtain the cashier address link carrying the service identifier of the card issuing institution (the service identifier of the card issuing institution is a service identifier for the service created by the card issuing institution according to the payment request) and send a payment operation request to the server of the card issuing institution 204 through a cashier after switching to the cashier to continue execution of the service. To enable the server of the card issuing institution 204 to determine an operation for which service the payment operation request initiated by the purchasing terminal 201 corresponds to, when the purchasing terminal 201 sends the payment operation request, the payment operation request may carry the service identifier of the card issuing institution. It can be seen that the service identifier of the card issuing institution is mainly configured to enable the server of the card issuing institution 204 to determine which service the payment operation request sent from the purchasing terminal 201 corresponds to.

Therefore, in an embodiment of this application, in order to reduce the wait time for the purchasing terminal 201, after receiving the payment request sent from the server of the acquiring institution 203, the server of the card organization 205 may first create a corresponding card organization service according to the payment request. Then, it may generate a service identifier of the card organization, generate a cashier address link that carries the service identifier of the card organization according to a pre-stored fixed address corresponding to the card issuing institution and the service identifier of the card organization, return the link to the server of the acquiring institution 203, and send the service identifier of the card organization to the server of the card issuing institution 204.

As a result, on the one hand, after the server of the acquiring institution 203 forwards the cashier address link carrying the service identifier of the card organization to the purchasing terminal 201, the purchasing terminal 201 may switch to a cashier corresponding to the cashier address link (e.g., a cashier page of the card issuing institution) and send a payment operation request carrying the service identifier of the card organization to the server of the card issuing institution 204 according to the service identifier of the card organization. On the other hand, after receiving the service identifier of the card organization, the server of the card issuing institution 204 may create a payment service corresponding to the payment request according to the service identifier of the card organization. Since the payment service is created according to the service identifier of the card organization, when the card issuing institution receives the payment operation request carrying the service identifier of the card organization sent from the purchasing terminal 201, it may determine the payment service corresponding to the payment operation request according to the service identifier of the card organization and execute the payment service.

A plurality of services may be involved during the forwarding of information related to a service by the card organization, such as a payment service, a fund receiving service, and a fund transfer service, so in order to enable the server of the card issuing institution 204 to determine what kind of service should be created according to the service identifier of the card organization, the server of the card organization 205 may also send the payment request to the server of the card issuing institution 204. That is, the server of the card organization 205 may send the payment request and the service identifier of the card organization to the server of the card issuing institution 204 to cause the server of the card issuing institution to determine what kind of service is to be created. Additionally, the server of the card organization 205 may also send a correlation between the payment request and the service identifier of the card organization to the server of the card issuing institution 204 to cause the server of the card issuing institution to determine the correlation between the service identifier of the card organization and the payment request when it receives the payment request and the service identifier of the card organization respectively.

Alternatively, the server of the card organization 205 may also incorporate the service identifier of the card organization into the payment request and send it to the server of the card issuing institution 204 to the server of the card issuing institution 204 to determine to create a payment service.

Still alternatively, the card organization may predetermine a rule for service identifiers with the card issuing institution and send the service identifier of the card organization only to the server of the card issuing institution 204 to cause the server of the card issuing institution 204 to determine what kind of service is to be created according to the service identifier of the card organization. For example, the rule for service identifiers is defined as follows: when a last digit of the service identifier of the card organization is 1, a payment service is to be created; when the last digit is 2, a fund receiving service is to be created; and when the last digit is 3, a fund transfer service is to be created. When the service identifier of the card organization sent from the server of the card organization 205 to the server of the card issuing institution 204 is created by the payment request, the last digit of the service identifier of the card organization is 1.

Certainly, in this application, there is no specific restriction on the way of sending the service identifier of the card organization employed by the server of the card organization 205.

In an embodiment of this application, the server of the card issuing institution 204 may receive the payment request and the service identifier of the card organization sent from the server of the card organization 205 and create the payment service according to the service identifier of the card organization. When the server of the card issuing institution receives the payment operation request carrying the service identifier of the card organization sent from the purchasing terminal 201, it may determine the payment service corresponding to the payment operation request according to the service identifier of the card organization and execute the payment service.

By means of the payment service execution system illustrated in FIG. 3, the server of the card organization 205 may return the service identifier of the card organization to the server of the acquiring institution 203 to ensure that the service corresponding to the payment request is continued, without waiting for the card issuing institution to return an identifier of the service created according to the payment request. Additionally, the server of the card issuing institution 204 may also create a payment service based on the service identifier of the card organization according to the payment request and the service identifier of the card organization sent from the server of the card organization 205, and determine the global uniqueness of the payment service according to the service identifier of the card organization to ensure that the payment service can be normally executed. It can be seen that, in this application, the service identifier of the card organization replaces the role of the service identifier of the card issuing institution in the existing technologies, so that the server of the card issuing institution 204 can determine the correlation between the created service and the operation request according to the service identifier of the card organization, to ensure normal execution of the service, thus reducing the wait time for the purchasing terminal 201 and avoiding problems such as increased security risks and reduced payment efficiency caused by a long payment service execution time.

In addition, in an embodiment of this application, there is no restriction on the order of the following operations executed after the server of the card organization 205 generates the service identifier of the card organization: sending the cashier address link carrying the service identifier of the card organization to the server of the acquiring institution 203 and sending the service identifier of the card organization to the server of the card issuing institution 204. The server of the card organization 205 may send the cashier address link carrying the service identifier of the card organization to the server of the acquiring institution 203 and the service identifier of the card organization to the server of the card issuing institution 204 simultaneously. Alternatively, it may also send the cashier address link carrying the service identifier of the card organization to the server of the acquiring institution 203 and then send the service identifier of the card organization to the server of the card issuing institution 204, or it may send the service identifier of the card organization to the server of the card issuing institution 204 and then send the cashier address link carrying the service identifier of the card organization to the server of the acquiring institution 203, and so on.

Further, in an embodiment of this application, after the server of the card organization 205 generates the cashier address link carrying the service identifier of the card organization, the server of the card organization may also send the cashier address link directly to the purchasing terminal 201 to save the time and network resources consumed by the forwarding of the cashier address link between the server of the acquiring institution 203 and the merchant terminal 202.

In particular, when the purchasing terminal 201 sends the payment request to the merchant terminal 202, in addition to an identifier of the server of the card issuing institution 205, the payment request may carry an identifier of the purchasing terminal 201, which may be an Internet Protocol address (IP address) of the purchasing terminal 201. Thus, by means of the merchant terminal 202 and the server of the acquiring institution 203, the server of the card organization 205 may receive the payment request carrying the identifier of the purchasing terminal 201 and the identifier of the server of the card issuing institution 204. Therefore, after generating the cashier address link carrying the service identifier of the card organization, the server of the card organization 205 may directly return the cashier address link to the purchasing terminal 201 according to the identifier of the purchasing terminal 201. Certainly, in the payment service execution system provided according to an embodiment of this application, there is no restriction on the way in which the server of the card organization 205 returns the cashier address link to the purchasing terminal 201. Such way may be set by a staff as needed during an actual operation. For example, when the server of the card organization 205 has low operating load, it returns the cashier address link directly to the purchasing terminal 201. When the server of the card organization 205 has high operating load, it returns the cashier address link to the purchasing terminal 201 via the server of the acquiring institution 203 and the merchant terminal 202, and so on.

Further, in an actual application process, data may be transferred via a network among the purchasing terminal 201, the merchant terminal 202, the server of the acquiring institution 203, the server of the card issuing institution 204, and the server of the card organization 205, and a network delay possibly occurs to the network. In addition, apparatuses corresponding to the terminals and servers above may possibly crash and thus cause delayed data transfer. As a result, after the server of the card organization 205 sends the service identifier of the card organization to the server of the card issuing institution 204 and the server of the acquiring institution 203 respectively, the server of the card issuing institution 204 may possibly receive the payment operation request carrying the service identifier of the card organization sent from the purchasing terminal 201, but may not receive the service identifier of the card organization and the payment request sent from the server of the card organization 205. Since the server of the card issuing institution 204 has not yet created the payment service according to the service identifier of the card organization, the server of the card issuing institution 204 cannot execute the payment service according to the payment operation request. That is, the server of the card issuing institution 204 cannot determine the payment service corresponding to the service identifier of the card organization according to the service identifier of the card organization carried in the payment operation request, and the server of the card issuing institution 204 cannot execute the service corresponding to the payment operation request.

Therefore, in the case that the server of the card issuing institution 204 first receives the payment operation request carrying the service identifier of the card organization sent from the purchasing terminal 201, the server of the card issuing institution 204 may send a query request to the server of the card organization 205 according to the service identifier of the card organization. The query request is configured to enable the server of the card organization 205 to query whether there is the service identifier of the card organization in the server of the card organization 205 according to the service identifier of the card organization, and return a query result to the server of the card issuing institution. In particular, the server of the card organization 205 may query whether there is a service corresponding to the service identifier of the card organization according to the query request. If so, it returns a query result of existence to the server of the card issuing institution 204. If not, it returns a query result of non-existence to the server of the card issuing institution 204. Certainly, in this application, the server of the card organization 205 may also use the payment request and the service identifier of the card organization as the query result upon determination of an existence of the service identifier of the card organization, and send the payment request and the service identifier of the card organization to the server of the card issuing institution 204, or send the service identifier of the card organization to the server of the card issuing institution 204 as the query result, and so on. In particular, the query result may be sent in the same way as that the server of the card organization 205 sends the service identifier of the card organization to the server of the card issuing institution 204 as described above, and no restriction to the way is imposed in this application.

Further, the server of the card issuing institution 204 may iteratively send the query request to the server of the card organization 205 for a preset number of times or a preset duration, until the server of the card issuing institution 204 receives the payment request and the service identifier of the card organization sent from the server of the card organization 205, or until a number of times the query request is sent reaches the preset number of times, or until a duration in which the query request is iteratively sent reaches the preset duration.

In particular, when the server of the card issuing institution 204 receives a payment operation request carrying the service identifier of the card organization, the server of the card issuing institution 204 may determine whether there is a payment service created according to the service identifier of the card organization. If so, the payment service is executed according to the payment operation request, and if not, the query request is sent to the server of the card organization 205 according to a preset frequency until the service identifier of the card organization and the payment request sent from the server of the card organization 205 are received, or until a number of times the query request is sent reaches a preset number of times, or until a duration in which the query request is sent reaches a preset duration.

Furthermore, in the payment service execution system provided according to an embodiment of this application, the cashier address link may be a uniform resource locator (URL), and thus the URL generated by the server of the card organization 205 may carry the service identifier of the card organization and is sent to the purchasing terminal 201 so that when the purchasing terminal 201 receives the URL, it may switch to a cashier page corresponding to the server of the card issuing institution according to the URL, and send a payment operation request carrying the service identifier of the card organization to the server of the card issuing institution 204 according to the service identifier of the card organization. In addition, the server of the card issuing institution 204 may receive the payment operation request carrying the service identifier of the card organization sent from the purchasing terminal 201 according to the URL carrying the service identifier of the card organization. Other subsequent steps may be consistent with the aforementioned process, and details are not described in this application.

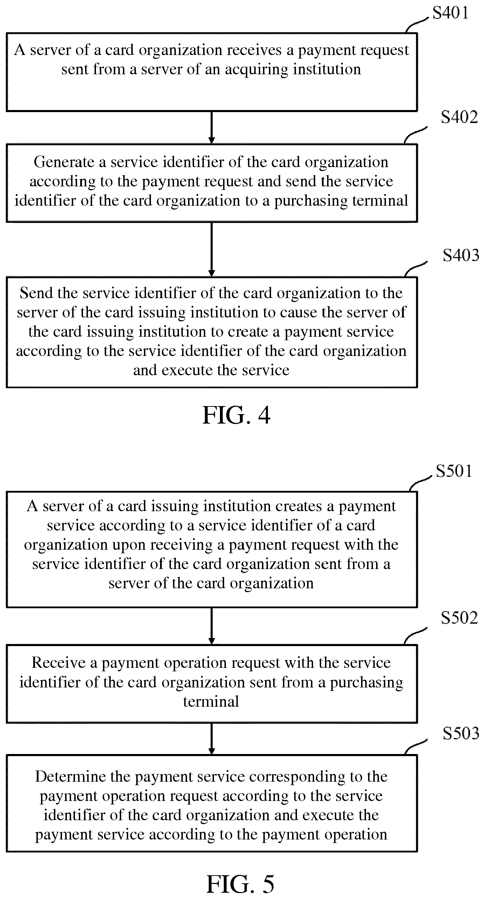

Based on the payment service execution system illustrated in FIG. 3, a payment service execution process is accordingly provided in this application, as shown in FIG. 4.

FIG. 4 is a payment service execution process according to an embodiment of this application, which may particularly include the steps of:
S401: A server of a card organization receives a payment request sent from a server of an acquiring institution.

In a quadripartite mode in the existing technologies, a payment request between a server of an acquiring institution and a server of a card issuing institution needs is forwarded by a server of a card organization that is an "intermediary," which causes a user to wait for a long time during payment service execution. Therefore, in an embodiment of this application, a payment request carrying an identifier of the server of the card issuing institution sent from the server of the acquiring institution may be received by the server of the card organization, and the payment request is to be executed by the server of the card issuing institution.

In addition, it should be noted that the acquiring institution and the card issuing institution may be a unit, institution, platform or third party that provides financial services such as a payment service, a fund receiving service, and a fund transfer service. The acquiring institution and the card issuing institution may provide services such as off-line payment, fund receiving, and fund transfer, as well as services such as on-line payment, fund receiving, and fund transfer. The card organization functions to forward information related to financial services between the acquiring institution and the card issuing institution such as a payment service, a fund receiving service, and a fund transfer service.

Further, since the service request is to be executed by the server of the card issuing institution, the server of the card organization may also determine the server of the card issuing institution that forwards the payment request according to the payment request. Therefore, in this application, the payment request may also carry an identifier of the server of the card issuing institution so that the server of the card organization can determine an object that needs to forward the service request (i.e. the server of the card issuing institution) according to the identifier of the server of the card issuing institution when receiving the service request.

Furthermore, since the card issuing institution and the acquiring institution may respectively have multiple servers for service execution, that is, the server of the card issuing institution and the server of the acquiring institution may be distributed servers, the server of the acquiring institution and the server of the card issuing institution described in this application may be respectively taken as one of distributed servers of different institutions, as shown in Table 1.

**Table 1**

| Acquiring institution | | | Card issuing institution | | |
|---|---|---|---|---|---|
| Server of acquiring institution | 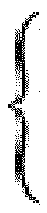 | Server a1 | Server of card issuing institution | 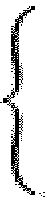 | Server b1 |
| | | Server a2 | | | Server b2 |
| | | ⋮ | | | ⋮ |
| | | Server an | | | Server bm |

In the table, the server a1, the server a2 ... the server an, as well as the server b1, the server b2 ... the server bm may respectively be various independent servers of the distributed servers of the acquiring institution and the card issuing institution, and the server of the acquiring institution may particularly be regarded as any of the server a1, the server a2 ... the server an. By the same reasoning, the server of the card issuing institution may particularly be regarded as any of the server b1, the server b2 ... the server bm. Therefore, in this application, the server of the card organization may be determined to be a particular apparatus when it is determined that the payment request is executed by the server of the card issuing institution according to the identifier of the server of the card issuing institution.

Certainly, in this application, for the convenience of description, only the server of the acquiring institution and the server of the card issuing institution are described hereafter.

It should be noted that the server of the card organization may be a separate apparatus or a system consisting of multiple apparatuses, i.e., distributed servers.

S402: Generate a service identifier of the card organization according to the payment request, and send the service identifier of the card organization to a purchasing terminal.

In an embodiment of this application, the card organization receives the payment request, and the server of the card organization may determine that the payment request is to be forwarded to the server of the card issuing institution according to the server of the card issuing institution carried in the payment request, so in order to execute the forwarded service, the server of the card organization may create a corresponding card organization service according to the payment request, and generate the service identifier of the card organization.

In particular, the server of the card organization may first determine the identifier of the server of the card issuing institution carried in the payment request, and determine that the payment request is a service that is to be executed by the server of the card issuing institution. Then the server of the card organization may create a corresponding forwarding service according to the payment request, and generate the service identifier of the card organization for the forwarding service to execute the operation of forwarding the payment request.

In addition, in the existing technologies, the intermediate server needs to send the service request to the server of the card issuing institution so that the server of the card issuing institution establishes a service according to the service request, and receive a response returned from the server of the card issuing institution (e.g., the server of the card issuing institution establishes a service identifier according to the service request) after performing a corresponding operation. Then, it returns the response to the server of the acquiring institution which sends the response to the purchasing terminal through a merchant terminal to continue the service. However, it takes a long time to execute the above-mentioned procedures in order to complete the entire payment service execution process. Therefore, in this application, in order to reduce the time consumed by the above process, the intermediate server may return an intermediate service identifier directly to the server of the acquiring institution which sends the intermediate service identifier to the purchasing terminal through the merchant terminal to continue the service.

Further, typically, upon receipt of the payment request, if the server of the card issuing institution determines that the payment request is targeted for a service that can be normally executed, the server of the card issuing institution may return a corresponding cashier address link of the card issuing institution to the server of the card organization so that the payment service corresponding to the payment request is normally executed. In general, a common structure of the cashier address link is a fixed address corresponding to the card issuing institution + a service identifier of the card issuing institution generated by the card issuing institution according to the payment request. For example, in the case that a service identifier corresponding to a payment request B generated by a server of a bank A is 1234, a cashier address link generated and returned to the server of the card organization may be www.A--Bank.com.pay/1234, www.A--Bank.com.pay in the cashier address link being a fixed address of the Bank A. The card issuing institution determines a service corresponding to the payment request according to the service identifier 1234 so that when it receives a payment operation request carrying a service identifier of 1234 in the future, it determines that the payment operation request corresponds to the service corresponding to the payment request.

Therefore, in order to ensure that the service is normally executed, in an embodiment of this application, after the server of the card organization establishes a corresponding service (e.g., a fund transfer service) according to the payment request, it creates a corresponding service identifier of the card organization corresponding to the service. Then, it may determine a fixed address corresponding to the card issuing institution according to a correlation between a pre-stored fixed address and the identifier of the server of the card issuing institution, and generate a cashier address link carrying the service identifier of the card organization, and then return the cashier address link directly to the server of the acquiring institution so that the service corresponding to the payment request is continued, without the need to forward the cashier address link carrying the service identifier of the card issuing institution to the server of the acquiring institution after forwarding of the payment request to the server of the card issuing institution and receiving of the cashier address link carrying the service identifier of the card issuing institution returned by the server of the card issuing institution.

In particular, since the server of the card organization functions to forward communications between servers of various acquiring institutions and servers of various card issuing institutions, the server of the card organization may pre-determine and store a fixed address corresponding to a card issuing institution, generate a cashier address link carrying the service identifier of the card organization which uses the service identifier of the card organization generated by the server of the card organization as the service identifier carried in the cashier address link, and return it to the server of the acquiring institution.

Firstly, the server of the card organization may pre-store a fixed address corresponding to each various card issuing institution, and in particular, the pre-stored fixed address may be a fixed prefix of a cashier address link of the card issuing institution. In addition, the server of the card organization may also establish a correlation between the fixed address and an identifier of the server of the card issuing institution, and thus the server of the card organization may determine the fixed address corresponding to the identifier of the server of the card issuing institution according to the identifier of the server of the card issuing institution carried in the payment request received in step S401.

For example, if the identifier of the server of the card issuing institution carried in the payment request is A-Bank, the server of the card organization may determine that the cashier address link is www.A--Bank.com.pay according to correlations between various pre-stored fixed addresses and identifiers of services of various card issuing institutions as shown in Table 1.

**Table 1**

| Identifier of server of card issuing institution | Fixed address |
|---|---|
| A-Bank | www.A--Bank.com.pay |
| CBB | www.CBB.com.cn/p/c |
| J.P.Lewinsky | www.JPLewinsky.us/js |
| civitbank | www.civit.com/bank/cn |

Secondly, the server of the card organization may replace the service identifier created by the card issuing institution according to the payment request in the existing technologies with the service identifier of the card organization generated in step S402, and generate a cashier address link carrying the service identifier of the card organization according to the service identifier of the card organization and the fixed address, and return it to the server of the acquiring institution.

Referring to the example above again, assuming that the server of the card organization has created in step S402 a corresponding service of the card organization service according to the payment request and the service identifier of the card organization is 7890, the server of the card organization may generate a cashier address link, i.e., www.A--Bank.com.pay/7890, according to the fixed address (i.e., a fixed prefix of the cashier address link) and the service identifier of the card organization, which will be returned to the server of the acquiring institution.

By means of the process above, the server of the acquiring institution may return the cashier address link carrying the service identifier of the card organization to the merchant terminal and then to the purchasing terminal through the merchant terminal, and finally the purchasing terminal can switch to a page corresponding to the cashier address link, so that the user can perform a payment operation with the purchasing terminal. In addition, the purchasing terminal may send a payment operation request to the server of the card issuing institution according to the cashier address link to ensure that the service corresponding to the payment request is continued. Certainly, the process in which the server of the acquiring institution forwards the cashier address link carrying the service identifier of the card organization and finally the user performs the payment operation with the purchasing terminal is the same as that of the existing technologies, so details of this process are not described in this application.

It should be noted that for the server of the acquiring institution, the merchant terminal, and the purchasing terminal, the service is normally executed, regardless of whether the server of the card organization returns a cashier address link carrying a service identifier corresponding to a service established by the server of the card issuing institution or a cashier address link carrying the service identifier of the card organization corresponding to a fund transfer service established by the server of the card organization. The cashier address link may be a URL, that is, the cashier address link sent from the server of the card organization may be a URL carrying the service identifier of the card organization.

S404: Send the service identifier of the card organization to the server of the card issuing institution to cause the server of the card issuing institution to create the payment service according to the service identifier of the card organization and execute the service.

In an embodiment of this application, the server of the card organization has returned the cashier address link carrying the service identifier of the card organization to the purchasing terminal. However, if the payment request has not been sent to the server of the card issuing institution, the server of the card issuing institution is still unable to execute the payment service corresponding to the payment request. Therefore, similar to the existing technologies, the server of the card organization may forward the payment request to the server of the card issuing institution at this time. However, the server of the card organization has returned the cashier address link carrying the service identifier of the card organization to the server of the acquiring institution, so that when the purchasing terminal sends the payment operation request to the server of the card issuing institution, the service identifier of the card organization is carried in the payment operation request. Therefore, the server of the card issuing institution can only determine an operation, instruction, and request (e.g., the payment operation request) corresponding to the payment request from the service identifier of the card organization. Accordingly, when the server of the card organization forwards the payment request, it may also send the service identifier of the card organization to the server of the card issuing institution.

In particular, the server of the card organization may carry the service identifier of the card organization generated in step S402 in the payment request, and send it to the server of the card issuing institution so that the server of the card issuing institution determines that the server of the card organization has returned the cashier address link carrying the service identifier of the card organization to the purchasing terminal based on the service identifier of the card organization, and determines that there is no need to return the cashier address link carrying the service identifier of the card issuing institution to the purchasing terminal. Thus, the server of the card issuing institution may establish a payment service corresponding to the payment request according to the service identifier of the card organization, and execute the payment service upon receipt of a payment operation request carrying the service identifier of the card organization returned by the purchasing terminal. The cashier address link may be a URL.

For example, assuming that the service identifier of the card organization is c, upon receipt of a payment operation request d with a service identifier c of the card organization sent from the purchasing terminal, the server of the card issuing institution may determine that the payment operation request d is targeted for an operation of a payment service e created based on the service identifier c of the card organization, and the server of the card issuing institution may execute the payment service e based on the payment operation request d.

Certainly, executing the payment service based on the payment operation request is a basic payment service execution process of the existing technologies, so details are not described in this application.

In addition, the payment operation request may be a payment operation request sent from a user of the user terminal according to the cashier address link carrying the service identifier of the card organization sent from the server of the card organization in step S403.

Further, the server of the card issuing institution creates the payment service according to the service identifier of the card organization, and receives the payment operation request carrying the service identifier of the card organization sent from the purchasing terminal. It can be seen that the server of the card issuing institution may determine the payment service and the payment operation request in the server of the card organization according to the service identifier of the card organization. Therefore, the server of the card organization may determine the payment service corresponding to the payment operation according to the service identifier of the card organization, and execute the payment service according to the payment operation request. The service identifier of the card organization is globally unique to the server of the card issuing institution.

It should be noted that in an embodiment of this application, the order of executing of step S203 and step S204 is not defined, that is, for the server of the card organization, step S203 and step S204 may be executed simultaneously.

Furthermore, since the server of the card organization synchronously executes the sequential payment service execution procedures of the existing technologies (i.e., step S109 and step Sill shown in FIG. 1, which are steps executed in order by the intermediate server, and correspondingly in this application, step S403 and step S404 shown in FIG. 4 executed by the server of the card organization, which are steps that may be executed synchronously), the time point at which the payment operation request is received by the card issuing institution is not necessarily later than the time point at which the payment request is received. Therefore, in this application, when the server of the card issuing institution receives the payment operation request but does not receive the payment request, the server of the card issuing institution may send a query request to the server of the card organization to query the payment request corresponding to the service identifier of the card organization carried in the payment operation request according to the service identifier of the card organization. The query process may be repeated at a preset time interval until the server of the card issuing institution receives the payment request, or until the duration of sending the query request exceeds a preset duration. See the corresponding description of the payment service execution system as illustrated in FIG. 3 for the particular process, and details are not be described in this application.

What is received by the server of the card issuing institution may be a payment operation request carrying the service identifier of the card organization sent from the purchasing terminal to the server of the card issuing institution based on an URL carrying the service identifier of the card organization.

By means of the payment service execution method shown in FIG. 4, the server of the card organization does not merely passively forwards the payment request, but is involved in the entire payment service execution process. the server of the card organization firstly determines the fixed address corresponding to the card issuing institution based on the preset correlation between the identifier of the server of the card issuing institution and the fixed address, and then returns the cashier address link carrying the service identifier of the card organization to the server of the acquiring institution according to the globally unique service identifier of the card organization generated based on the payment request, so that the server of the acquiring institution may directly perform a subsequent service procedure, thereby saving the wait time for the user during execution of the service process. In addition, when the server of the card organization sends the cashier address link carrying the service identifier of the card organization to the server of the acquiring institution, it may also forward the service identifier of the card organization to the server of the card issuing institution, so that the server of the card issuing institution may create the payment service according to the service identifier of the card organization, and determine that the received payment operation request carrying the service identifier of the card organization is a payment operation request for the payment service, and execute the payment service. It can be seen that the server of the card organization sends the service identifier of the card organization to the server of the card issuing institution so that the server of the card issuing institution can create the payment service according to the service identifier of the card organization, and ensure that the payment service can be normally executed based on the global uniqueness of the service identifier of the card organization, but is not affected by the fact that the card organization sends the cashier address link carrying the service identifier of the card organization in advance. Moreover, returning the cashier address link carrying the service identifier of the card organization to the server of the acquiring institution in advance reduces the wait time for the user during execution of the payment service execution and improves the efficiency of execution of the payment service.

In addition, in step S404 in this application, when the server of the card organization sends the service identifier of the card organization to the server of the card issuing institution, the server of the card organization may also send the payment request to the server of the card issuing institution. That is, the server of the card organization may send the payment request and the service identifier of the card organization to the server of the card issuing institution so that the server of the card issuing institution may determine what kind of service is to be created. Additionally, the server of the card organization may also send a correlation between the payment request and the service identifier of the card organization to the server of the card issuing institution so that the server of the card issuing institution can determine the correlation between the service identifier of the card organization and the payment request when it receives the payment request and the service identifier of the card organization respectively.

Still alternatively, the card organization may predetermine rules for service identifiers with the card issuing institution, and send the service identifier of the card organization only to the server of the card issuing institution so that the server of the card issuing institution can determine what kind of service is to be created according to the service identifier of the card organization. For example, the rules for service identifiers are defined as follows: when a last digit of the service identifier of the card organization is 1, a payment service is to be created; when the last digit is 2, a fund receiving service is to be created; and when the last digit is 3, a fund transfer service is to be created. When the service identifier of the card organization sent from the server of the card organization to the server of the card issuing institution is created by the payment request, the last digit of the service identifier of the card organization is 1.

Certainly, in this application, there is no specific restriction on the method employed by the server of the card organization in sending the service identifier of the card organization.

Further, in an embodiment of this application, the server of the card organization may also send the cashier address link carrying the service identifier of the card organization directly to the purchasing terminal, without requiring it to be forwarded via the server of the acquiring institution and the merchant terminal. See the corresponding description of the payment service execution system as illustrated in FIG. 3 for the specific implementations, and details are not described in this application.

Based on the payment service execution process illustrated in FIG. 4, a payment service execution process executed by a server of a card issuing institution is accordingly provided according to an embodiment of this application, as shown in FIG. 5.

FIG. 5 is a payment service execution process according to an embodiment of this application, which may include the steps of:
S501: A server of a card issuing institution creates a payment service according to a service identifier of a card organization sent from a server of the card organization upon receiving a payment request carrying the service identifier of the card organization.
   In an embodiment of this application, the payment service execution process illustrated in FIG. 5 may be executed by the server of the card issuing institution involved in the payment service execution process illustrated in FIG. 4.
   Therefore, in an embodiment of this application, when the server of the card issuing institution receives the payment request carrying the service identifier of the card organization forwarded by the server of the card organization, the server of the card issuing institution may create the payment service according to the service identifier of the card organization, so that it may determine the payment service to be created according to the service identifier of the card organization when receiving a payment operation request carrying the service identifier of the card organization, and then execute the payment service according to the payment operation request.
S502: Receive a payment operation request carrying the service identifier of the card organization sent from a purchasing terminal.
   In an embodiment of this application, the payment service execution process corresponds to the payment service execution process illustrated in FIG. 4. The payment service execution process is no longer the payment service execution process illustrated in FIG. 2 in which operations are executed by various servers in order, and step S402 and step S403 may be simultaneously executed by the server of the card organization. Therefore, the order in which the server of the card issuing institution receives the payment request carrying the service identifier of the card organization sent from the server of the card organization and receives the payment operation request carrying the service identifier of the card organization sent from the purchasing terminal may be in various forms, that is, the order in which step S502 and step S501 are executed may be different or completely the same.
   In other words, an address of the server of the card issuing institution and the service identifier of the card organization returned by the server of the card organization should be forwarded by a server of an acquiring institution and a merchant terminal before received by the purchasing terminal. Therefore, the server of the card issuing institution typically first receives the payment request carrying the service identifier of the card organization sent from the server of the card organization and then receives the payment operation request sent from the purchasing terminal. However, in consideration of problems such as a possible network delay, the order in which the server of the card issuing institution receives the payment request and the payment operation request is uncertain.
   In addition, the purchasing terminal may switch to a cashier page of the card issuing institution according to a received cashier address link carrying the service identifier of the card organization, and send a payment operation request carrying the service identifier of the card organization to the server of the card issuing institution through the cashier page. The purchasing terminal may be that illustrated in FIG. 3 and FIG. 4, and the cashier address link may be a URL. In other words, the purchasing terminal sends the payment operation request carrying the service identifier of the card organization to the server of the card issuing institution based on the received URL carrying the service identifier of the card organization.
S503: Determine the payment service corresponding to the payment operation request according to the service identifier of the card organization, and execute a corresponding payment operation during the payment service.

In an embodiment of this application, after the server of the card issuing institution receives the payment operation request and the payment request, since the server of the card issuing institution may create a payment service according to the payment request, and may determine that the payment operation request corresponds to the service request according to the service identifier of the card organization, the server of the card issuing institution may execute the payment service according to the payment operation request.

In addition, as described in step S502, it is unclear in this application whether the server of the card issuing institution first receives the payment request or the payment operation request. In the case that the server of the card issuing institution first receives the payment operation request, the payment service corresponding to the service identifier of the card organization carried in the payment operation request is not carried in the server of the card issuing institution this time, so the server of the card issuing institution may also send a query request to the server of the card organization this time so that the server of the card organization queries whether there is the service identifier of the card organization and returns a query result to the server of the card issuing institution.

In particular, the server of the card issuing institution may first determine whether there is the payment service created according to the service identifier of the card organization in the server of the card issuing institution according to the service identifier of the card organization carried in the payment operation request. If so, the payment service is executed according to the payment operation request. If not, a query request carrying the service identifier of the card organization is sent to the server of the card organization according to the service identifier of the card organization so that the server of the card organization may query whether the service identifier of the card organization exists according to the service identifier of the card organization, and a query result is returned to the server of the card issuing institution. The process in which the server of the card organization returns the query result to the server of the card issuing institution may be the same as that described with respect to the payment service execution system illustrated in FIG. 3, and details are not described in this application.

Further, the server of the card issuing institution may also iteratively send the query request to the server of the card organization at a preset time interval, until that the server of the card issuing institution receives the service identifier of the card organization and the payment request sent from the server of the card organization, or until a number of times the query request is sent reaches a preset number of queries, or until a duration in which he query request is iteratively sent reaches a preset duration. Certainly, in this application, the preset number of queries and the preset duration may be set by a staff according to an actual application.

It should be noted that technical carriers involved in the payment described in the embodiments of this application may include, for example, near field communication (NFC), WIFI, 3G/4G/5G, "payment by POS terminal" technology, QR code scanning technology, barcode scanning technology, Bluetooth, infrared, short message service (SMS), multimedia message service (MMS), etc.

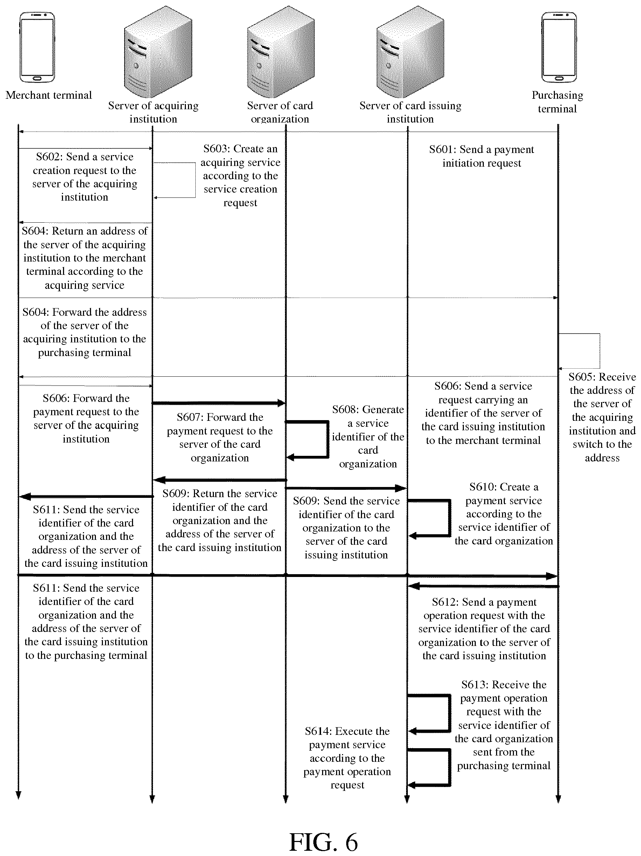

Based on the payment service execution process illustrated in FIG. 4, a detailed payment service execution process is provided in this application, as shown in FIG. 6.

FIG. 6 is a detailed payment service execution process according to an embodiment of this application, which includes:
S601: A purchasing terminal sends a payment initiation request to a merchant terminal;
S602: The merchant terminal sends a service creation request to a server of an acquiring institution corresponding to the merchant terminal according to the payment initiation request;
S603: The server of the acquiring institution creates an acquiring service according to the service creation request.
S604: The server of the acquiring institution returns an address of the server of the acquiring institution to the merchant terminal according to the acquiring service to cause the merchant terminal to forward the address of the server of the acquiring institution to the purchasing terminal.
S605: The purchasing terminal receives the address of the server of the acquiring institution and switches to the address.
S606: The purchasing terminal sends a service request to the merchant terminal according to the address of the server of the acquiring institution, so that the merchant terminal forwards the payment request to the server of the acquiring institution, the payment request carrying an identifier of a server of a card issuing institution.
S607: The server of the acquiring institution forwards the service request to a server of a card organization when it is determined that the identifier of the server of the card issuing institution is not an identifier of the server of the acquiring institution.
S608: The server of the card organization generates a service identifier of the card organization according to the payment request;
S609: The server of the card organization returns the service identifier of the card organization and an address of the server of the card issuing institution to the server of the acquiring institution, adds the service identifier of the card organization to the service request, and sends the service request carrying the service identifier of the card organization to the server of the card issuing institution.
S610: The server of the card issuing institution creates a payment service according to the service request carrying the service identifier of the card organization.
S611: The server of the acquiring institution sends the service identifier of the card organization and the address of the server of the card issuing institution to the purchasing terminal via the merchant terminal.
S612: The purchasing terminal sends a payment operation request carrying the service identifier of the card organization to the server of the card issuing institution according to the service identifier of the card organization and the address of the server of the card issuing institution.
S613: The server of the card issuing institution receives the payment operation request carrying the service identifier of the card organization sent from the purchasing terminal.
S614: The server of the card issuing institution determines the created payment service according to the service identifier of the card organization, and executing the payment service according to the payment operation request.

In particular, the server of the acquiring institution, the server of the card issuing institution, and the server of the card organization may be a separate apparatus or a system consisting of multiple apparatuses, i.e., distributed servers, which is not defined in this application. The steps S601-S606 are the same as those in the existing technologies, the steps S607-S614 are those corresponding to the payment service execution process of this application, for example, detailed steps corresponding to the payment service execution process of FIG. 4.

It should be noted that various steps of the method provided in the embodiments of this application may be executed by the same apparatus, or may be executed by different apparatuses. For example, the steps S401 and S402 may be executed by an apparatus 1, and step S403 may be executed by an apparatus 2. As another example, step S401 may be executed by the apparatus 1, and the steps S402 and S403 may be executed by the apparatus 2, and so on. In other words, each of the server of the card organization, the server of the acquiring institution, and the server of the card issuing institution may be a distributed server consisting of multiple apparatuses.

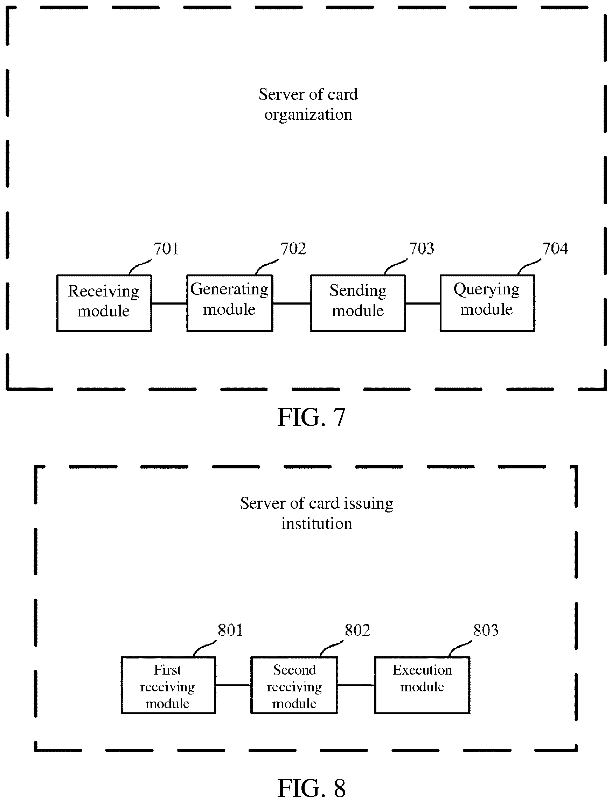

Based on the payment service execution process illustrated in FIG. 4, a payment service execution device is accordingly provided in an embodiment of this application, as shown in FIG. 7.

FIG. 7 is a schematic structural diagram of a payment service execution device according to an embodiment of this application, the payment service execution device including:
a receiving module 701 for receiving a payment request sent from a server of an acquiring institution, where the payment request carries an identifier of a server of a card issuing institution, and the payment request indicates a payment service to be executed by the server of the card issuing institution;
a generating module 702 for generating a service identifier of a card organization according to the payment request, and sending the service identifier of the card organization to a purchasing terminal; and
a sending module 703 for sending the service identifier of the card organization to the server of the card issuing institution so that the server of the card issuing institution creates the payment service according to the service identifier of the card organization, and executes the service.

The generating module 702 generates a cashier address link carrying the service identifier of the card organization according to a pre-stored fixed address corresponding to the card issuing institution and the service identifier of the card organization, and sends it to the purchasing terminal. The cashier address link is configured to enable the purchasing terminal to send the payment operation request carrying the service identifier of the card organization to the server of the card issuing institution according to the cashier address link.

The cashier address link may be a URL, that is, the generating module 702 generates a URL carrying the service identifier of the card organization.

The device further includes:
a querying module 704 for receiving a query request that is sent from the server of the card issuing institution based on the service identifier of the card organization, querying whether there is the service identifier of the card organization according to the query request, and returning a query result to the server of the card issuing institution, where the query request for the payment request is a query request that is sent when the server of the card issuing institution fails to determine the payment service created according to the service identifier of the card organization, based on the service identifier of the card organization carried in the payment operation request sent from the purchasing terminal.

In particular, the payment service execution device described above with reference to FIG. 8 may be located in the server of the card organization, which may be either an apparatus or a system consisting of multiple apparatuses, i.e., distributed servers.

Based on the payment service execution process illustrated in FIG. 5, a payment service execution process device executed by a server of a card issuing institution is accordingly provided according to an embodiment of the this application, as shown in FIG. 7.

FIG. 8 is a schematic structural diagram of a payment service execution device according to an embodiment of this application, including:
a first receiving module 801 for creating a payment service according to a service identifier of a card organization sent from a server of the card organization upon receiving a payment request carrying the service identifier of the card organization;
a second receiving module 802 for receiving a payment operation request carrying the service identifier of the card organization sent from a purchasing terminal; and
an execution module 803 for determining the payment service corresponding to the payment operation request according to the service identifier of the card organization, and executing a corresponding payment operation during the payment service.

If the execution module 803 determines, according to the service identifier of the card organization, that there is no payment service corresponding to the identifier at present, it sends a query request to the server of the card organization according to the service identifier of the card organization so that the server of the card organization queries whether there is the service identifier of the card organization and returns a query result to the server of the card issuing institution.

The payment operation request received by the second receiving module 802 sent from the purchasing terminal may be a payment operation request sent to the server of the card issuing institution by the purchasing terminal via a cashier page corresponding to the card issuing institution after switching to the cashier page according to a received cashier address link carrying the service identifier of the card organization. The cashier address link may be a URL. Thus, the purchasing terminal may send the payment operation request carrying the service identifier of the card organization to the server of the card issuing institution via the received URL carrying the service identifier of the card organization.

In particular, the payment service execution device described above with reference to FIG. 8 may be located in the server of the card issuing institution, which may be either an apparatus or a system consisting of multiple apparatuses, i.e., distributed servers.

In the 1990s, improvements of a technology can be clearly distinguished between hardware improvements (for example, improvements to a circuit structure such as a diode, a transistor, a switch, etc.) and software improvements (improvements to a method procedure). However, with the development of technology, improvements of many method procedures can be considered as direct improvements of hardware circuit structures. Designers almost all program an improved method procedure to a hardware circuit, to obtain a corresponding hardware circuit structure. Therefore, it does not mean that the improvement of a method procedure cannot be implemented by using a hardware entity module. For example, a programmable logic device (PLD) such as a field programmable gate array (FPGA) is a type of integrated circuit whose logic function is determined by a user by programming the device. The designers perform voluntary programming to "integrate" a digital system into a single PLD without requiring a chip manufacturer to design and prepare a dedicated integrated circuit chip. In addition, instead of making an integrated circuit chip manually, the programming is mostly implemented by using "logic compiler" software, which is similar to the software compiler used to write programs. Original code before compiling is also written in a specific programming language, which is referred to as Hardware Description Language (HDL). There are many types of HDLs, such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, Ruby Hardware Description Language (RHDL), etc. Currently, Very-High-Speed Integrated Circuit Hardware Description Language (VHDL) and Verilog are most commonly used. A person skilled in the art should also understand that as long as a method procedure is logically programmed and then programmed to an integrated circuit by using the foregoing hardware description languages, a hardware circuit that implements the logical method procedure can be easily obtained.

The controller can be implemented in any suitable manner, for example, the controller can take the form of, for example, a microprocessor or processor and a computer-readable medium storing computer-readable program code (for example, software or firmware) executable by the processor, a logic gate, a switch, an application-specific integrated circuit (ASIC), a programmable logic controller and an embedded microcontroller. Examples of the controller include, but are not limited to, the following microcontrollers: ARC 625D, Atmel AT91SAM, Microchip PIC18F26K20 and Silicone Labs C8051F320. The memory controller can also be implemented as part of the memory control logic. A person skilled in the art will also appreciate that, in addition to implementing the controller in the form of pure computer-readable program code, it is also possible to implement the controller in the form of a logic gate, switch, application-specific integrated circuit, programmable logic controller, and embedded microcontroller and other forms to achieve the same function. Such a controller can thus be considered as a hardware component and apparatuses included therein for implementing various functions can also be considered as structures inside the hardware component. Alternatively, apparatuses configured to implement various functions can be considered as both software modules implementing the method and structures inside the hardware component.

The system, the apparatus, the module or the unit described in the foregoing embodiments can be specifically implemented by a computer chip or an entity or implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, when the apparatus is described, the apparatus is divided into units according to functions, which are separately described. Certainly, in implementation of this application, the function of the units may be implemented in a same piece of or multiple pieces of software and/or hardware.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used for implementing each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may further be stored in a computer readable memory that can instruct the computer or any other programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may further be loaded onto a computer or another programmable data processing device, so that a series of operations and steps are performed on the computer or another programmable device, thereby generating computer-implemented processing. Therefore, the instructions executed on the computer or another programmable device provide steps for implementing a specific function in one or more processes in the flowcharts and/or in one or more blocks in the block diagrams.

In a typical configuration, the computer device includes one or more processors (CPUs), an input/output interface, a network interface, and a memory.

The memory may include, among computer readable media, a non-persistent memory such as a random access memory (RAM) and/or a non-volatile memory such as a read-only memory (ROM) or a flash memory (flash RAM). The memory is an example of the computer-readable medium.

The computer-readable medium includes persistent, non-persistent, movable, and unmovable media that may implement information storage by using any method or technology. Information may be a computer-readable instruction, a data structure, a program module, or other data. Examples of computer storage media include but are not limited to a phase change memory (PRAM), a static random access memory (SRAM), a dynamic random access memory (DRAM), other type of random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storage, a cassette magnetic tape, tape and disk storage or other magnetic storage device or any other non-transmission media that may be configured to store information that a computing device can access. Based on the definition in the present disclosure, the computer-readable medium does not include transitory computer readable media (transitory media), such as a modulated data signal and a carrier.

It should also be noted that the terms "include," "comprise," and any other variants mean to cover the non-exclusive inclusion. Thereby, the process, method, article, or device which include a series of elements not only include those elements, but also include other elements which are not clearly listed, or include the inherent elements of the process, method, article and device. Without further limitation, the element defined by a phrase "include one ..." does not exclude other same elements in the process, method, article or device which include the element.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

This application can be described in the general context of computer executable instructions executed by a computer, for example, a program module. Generally, the program module includes a routine, a program, an object, a component, a data structure, and the like for executing a particular task or implementing a particular abstract data type. This application can also be practiced in a distributed computing environment in which tasks are performed by remote processing devices that are connected through a communication network. In a distributed computing environment, the program module may be located in both local and remote computer storage media including storage devices.

The embodiments of the present disclosure are all described in a progressive manner. For same or similar parts in the embodiments, reference may be made to these embodiments. Each embodiment focuses on a difference from other embodiments. Especially, a system embodiment is basically similar to a method embodiment, and therefore is described briefly; for related parts, reference may be made to partial descriptions in the method embodiment.

The foregoing descriptions are merely embodiments of this application and are not intended to limit this application. For a person skilled in the art, various modifications and variations can be made to this application. Any modification, equivalent replacement, or improvement made without departing from the spirit and principle of this application shall fall within the scope of the claims of this application.

## Claims

1. A payment service execution system, comprising a purchasing terminal, a server of an acquiring institution, a server of a card organization, and a server of a card issuing institution, wherein
the purchasing terminal sends a payment request to the server of the acquiring institution, wherein the payment request carries an identifier of the server of the card issuing institution, and the payment request indicates a payment service to be executed by the server of the card issuing institution;
the server of the acquiring institution forwards the received payment request to the server of the card organization;
the server of the card organization generates a service identifier of the card organization according to the payment request, sends the service identifier of the card organization to the server of the card issuing institution, and sends the service identifier of the card organization to the purchasing terminal;
the server of the card issuing institution creates a payment service according to the service identifier of the card organization;
the purchasing terminal sends a payment operation request carrying the service identifier of the card organization to the server of the card issuing institution; and
the server of the card issuing institution executes the created payment service according to the service identifier of the card organization carried in the payment operation request.

2. The system according to claim 1, wherein the server of the card organization generates a cashier address link carrying the service identifier of the card organization according to a pre-stored fixed address of the server of the card issuing institution and the service identifier of the card organization, and returns the cashier address link to the purchasing terminal; and
the purchasing terminal sends the payment operation request carrying the service identifier of the card organization to the server of the card issuing institution according to the cashier address link.

3. The system according to claim 2, wherein the server of the card organization returns the cashier address link carrying the service identifier of the card organization to the purchasing terminal via the server of the acquiring institution.

4. The system according to claim 1, wherein when the server of the card issuing institution fails to determine, according to the service identifier of the card organization carried in the payment operation request, the payment service created according to the service identifier of the card organization, the server of the card issuing institution sends a query request to the server of the card organization according to the service identifier of the card organization; and
the server of the card organization queries whether there is the service identifier of the card organization according to the query request and returns a query result to the server of the card issuing institution.

5. A payment service execution method, comprising:
receiving, by a server of a card organization, a payment request sent from a server of an acquiring institution, wherein the payment request carries an identifier of a server of a card issuing institution, and the payment request indicates a payment service to be executed by the server of the card issuing institution;
generating a service identifier of the card organization according to the payment request and sending the service identifier of the card organization to a purchasing terminal; and
sending the service identifier of the card organization to the server of the card issuing institution to cause the server of the card issuing institution to create the payment service according to the service identifier of the card organization and execute the payment service.

6. The method according to claim 5, further comprising:
generating a cashier address link carrying the service identifier of the card organization according to a pre-stored fixed address corresponding to the card issuing institution and the service identifier of the card organization and sending the cashier address link to the purchasing terminal, the cashier address link configured to enable the purchasing terminal to send a payment operation request carrying the service identifier of the card organization to the server of the card issuing institution according to the cashier address link.

7. The method according to claim 5, further comprising:
receiving a query request sent from the server of the card issuing institution according to the service identifier of the card organization; and
querying whether there is the service identifier of the card organization according to the query request and returning a query result to the server of the card issuing institution; wherein
the query request is a query request that is sent when the server of the card issuing institution fails to determine, based on the service identifier of the card organization carried in the payment operation request sent from the purchasing terminal, the payment service created according to the service identifier of the card organization.

8. A payment service execution method, comprising:
creating, by a server of a card issuing institution, a payment service according to a service identifier of a card organization sent from a server of the card organization upon receiving the service identifier of the card organization;
receiving a payment operation request carrying the service identifier of the card organization sent from a purchasing terminal; and
determining the payment service corresponding to the payment operation request according to the service identifier of the card organization and executing the payment service according to the payment operation request.

9. The method according to claim 8, wherein the determining the payment service corresponding to the payment operation request according to the service identifier of the card organization further comprises:
upon determining that there is no payment service corresponding to the service identifier of the card organization,
sending a query request to the server of the card organization according to the service identifier of the card organization to cause the server of the card organization to query whether there is the service identifier of the card organization and send a query result to the server of the card issuing institution.

10. A payment service execution device, comprising:
a receiving module for receiving a payment request sent from a server of an acquiring institution, wherein the payment request carries an identifier of a server of a card issuing institution, and the payment request indicates a payment service to be executed by the server of the card issuing institution;
a generating module for generating a service identifier of a card organization according to the payment request and sending the service identifier of the card organization to a purchasing terminal; and
a sending module for sending the service identifier of the card organization to the server of the card issuing institution to cause the server of the card issuing institution to create the payment service according to the service identifier of the card organization and execute the payment service.

11. The device according to claim 10, wherein the generating module generates a cashier address link carrying the service identifier of the card organization according to a pre-stored fixed address corresponding to the card issuing institution and the service identifier of the card organization and sends the cashier address link to the purchasing terminal, the cashier address link configured to enable the purchasing terminal to send a payment operation request carrying the service identifier of the card organization to the server of the card issuing institution according to the cashier address link.

12. The device according to claim 10, further comprising:
a querying module for receiving a query request sent from the server of the card issuing institution according to the service identifier of the card organization, querying whether there is the service identifier of the card organization according to the query request, and returning a query result to the server of the card issuing institution, wherein the query request is a query request that is sent when the server of the card issuing institution fails to determine, based on the service identifier of the card organization carried in the payment operation request sent from the purchasing terminal, the payment service created according to the service identifier of the card organization.

13. A payment service execution device, comprising:
a first receiving module for creating a payment service according to a service identifier of a card organization sent from a server of the card organization upon receiving the service identifier of the card organization;
a second receiving module for receiving a payment operation request carrying the service identifier of the card organization sent from a purchasing terminal; and
an execution module for determining the payment service corresponding to the payment operation request according to the service identifier of the card organization and executing the payment service according to the payment operation request.

14. The device according to claim 13, wherein upon determining, according to the service identifier of the card organization, that there is no payment service corresponding to the service identifier, the execution module sends a query request to the server of the card organization according to the service identifier of the card organization to cause the server of the card organization to query whether there is the service identifier of the card organization and return a query result to the server of the card issuing institution.

15. A payment service execution system, comprising a purchasing terminal, a server of an acquiring institution, a server of a card organization, and a server of a card issuing institution, wherein
the purchasing terminal sends a payment request to the server of the acquiring institution, wherein the payment request carries an identifier of the server of the card issuing institution, and the payment request indicates a payment service to be executed by the server of the card issuing institution;
the server of the acquiring institution forwards the received payment request to the server of the card organization;
the server of the card organization generates a service identifier of the card organization according to the payment request, sends a uniform resource locator (URL) carrying the service identifier of the card organization to the server of the card issuing institution, and sends the URL to the purchasing terminal;
the server of the card issuing institution creates a payment service according to the service identifier of the card organization;
the purchasing terminal sends a payment operation request carrying the service identifier of the card organization to the server of the card issuing institution according to the URL; and
the server of the card issuing institution executes the created payment service according to the service identifier of the card organization carried in the payment operation request.

16. A payment service execution method, comprising:
receiving, by a server of a card organization, a payment request sent from a server of an acquiring institution, wherein the payment request carries an identifier of a server of a card issuing institution, and the payment request indicates a payment service to be executed by the server of the card issuing institution;
generating a service identifier of the card organization according to the payment request and generating a URL carrying the service identifier of the card organization, and sending the URL to a purchasing terminal; and
sending the service identifier of the card organization to the server of the card issuing institution to cause the server of the card issuing institution to create the payment service according to the service identifier of the card organization and execute the service.

17. A payment service execution method, comprising:
creating, by a server of a card issuing institution, a payment service according to a service identifier of a card organization sent from a server of the card organization upon receiving the service identifier of the card organization;
receiving a payment operation request carrying the service identifier of the card organization sent from a purchasing terminal according to a URL carrying the service identifier of the card organization; and
determining the payment service corresponding to the payment operation request according to the service identifier of the card organization and executing the payment service according to the payment operation request.

18. A payment service execution device, comprising:
a receiving module for receiving a payment request sent from a server of an acquiring institution, wherein the payment request carries an identifier of a server of a card issuing institution, and the payment request indicates a payment service to be executed by the server of the card issuing institution;
a generating module for generating a service identifier of the card organization according to the payment request and generating a URL carrying the service identifier of the card organization, and sending the URL to a purchasing terminal; and
a sending module for sending the service identifier of the card organization to the server of the card issuing institution to cause the server of the card issuing institution to create the payment service according to the service identifier of the card organization and execute the service.

19. A payment service execution device, comprising:
a first receiving module for creating a payment service according to a service identifier of a card organization sent from a server of the card organization upon receiving the service identifier of the card organization;
a second receiving module for receiving a payment operation request carrying the service identifier of the card organization sent from a purchasing terminal according to a URL carrying the service identifier of the card organization; and
an execution module for determining the payment service corresponding to the payment operation request according to the service identifier of the card organization and executing the payment service according to the payment operation request.
